# EUROPÄISCHE PATENTSCHRIFT

(11) **EP 0 428 496 B1**
(45) Veröffentlichungstag und Bekanntmachung des Hinweises auf die Patenterteilung: **02.03.1994**
(21) Anmeldenummer: 90890271.1
(22) Anmeldetag: 09.10.1990
(51) Int. Cl.: F16B 5/08, B23K 11/00

(54) **Verbindung für Bauteile aus unterschiedlichen Materialien**
Connection for construction elements of different materials
Connexion d'éléments de construction de matériaux différents

(30) Priorität: 13.11.1989 AT 2595/89
(43) Veröffentlichungstag der Anmeldung: 22.05.1991
(73) Patentinhaber: Austria Metall Aktiengesellschaft, A-5282 Braunau am Inn (AT)
(72) Erfinder: Garnweidner, Peter, A-5112 Lamprechtshausen 429a (AT)
(74) Vertreter: WILHELMS, KILIAN & PARTNER Patentanwälte

(56) Entgegenhaltungen:
- DE-A- 2 049 142
- DE-A- 3 210 310
- DE-C- 859 098
- GB-A- 30 097

## Beschreibung

Die Erfindung betrifft eine Verbindung zwischen Bauteilen aus verschiedenen Materialien, bei der in eines der Bauteile ein Verbindungskörper eingesetzt ist, der mit dem anderen Bauteil verschweißt ist.

Eine derartige Verbindung zur Befestigung eines Kunststoffteiles an einem Metallteil ist aus der DE-A-3210310 bekannt und so ausgebildet, daß das Kunststoffteil zwischen dem Metallteil und einer kopfartigen Verbreiterung eines metallischen Verbindungselementes angeordnet ist, dessen Schaft durch eine Bohrung im Kunststoffteil geführt ist, wobei die Stirnseite des Schaftes zur Bildung eines Schweißkontaktes am Metallteil anliegt.

Derartige Schweißverbindungen sind, beispielsweise bei der heutigen Serienfertigung von Fahrzeugkarosserien und ähnlichen Aufbauten vorteilhaft, bei denen ein hoher Automatisierungsgrad erforderlich ist.

Die der Erfindung zugrunde liegende Aufgabe besteht darin, die Verbindung der eingangs genannten Art so auszugestalten, daß sich ein Formschluß in axialer Richtung des Verbindungskörpers zwischen diesem und dem Bauteil ergibt, in das der Verbindungskörper eingesetzt ist.

Diese Aufgabe wird gemäß der Erfindung dadurch gelöst, daß der Verbindungskörper einen konischen Teil und einen dazu koaxialen zylindrischen Teil umfaßt, wobei der konische Teil an seiner Stirnfläche mit größerem Durchmesser mit dem anderen Bauteil verschweißt ist.

Durch diese Ausbildung wird neben der formschlüssigen Verbindung zwischen dem Verbindungskörper und dem Bauteil, in das dieser eingesetzt ist, auch eine besonders gute Wärmeabfuhr an die Umgebung erzielt.

Vorzugsweise ist der Verbindungskörper in das Bauteil eingesetzt, das die geringere Härte aufweist.

Der Verbindungskörper ist insbesondere ein Drehkörper, dessen Längsachse normal zur Verbindungsfläche der beiden Bauteile steht.

Der Verbindungskörper kann insbesondere von der Schweißstelle aus gesehen der Reihe nach abwechselnd konische und zylindrische Teile mit immer kleineren Durchmessern aufweisen, wobei ein weiterer zylindrischer Teil über der der Verbindungsfläche abgewandten Seite des Bauteils angeordnet ist, in das der Verbindungskörper eingesetzt ist, und etwa einen Durchmesser gleich dem Durchmesser des an der Schweißstelle liegenden konischen Teils aufweist.

Durch diese Ausbildung wird eine besonders gute Wärmeabfuhr d.h. sogar ein Kühleffekt erzielt.

Wenigstens die Umfangsfläche des der Schweißstelle am nächsten liegenden zylindrischen Teils des Verbindungskörpers kann dabei eine Rändelung oder eine Zahnung aufweisen.

Die erfindungsgemäße Verbindung wird vorzugsweise dadurch hergestellt, daß an der zu verbindenden Stelle in einem Bauteil ein Loch ausgestanzt und danach der Verbindungskörper eingepreßt und durch Schweißen vorzugsweise Widerstandspunktschweißen mit dem anderen Bauteil verbunden wird, wobei der konische Teil an seiner Stirnfläche mit größerem Durchmesser mit dem anderen Bauteil verschweißt wird.

Dieses Verfahren ist mit dem heute bei automatischen Fertigungen benützten Geräten problemlos durchführbar.

Im folgenden werden anhand der zugehörigen Zeichnung besonders bevorzugte Ausführungsbeispiele der erfindungsgemäßen Verbindung näher beschrieben. Es zeigen:
Fig.1 eine Schnittansicht durch ein Ausführungsbeispiel der erf indungsgemäßen Verbindung längs der Linie I-I in Fig.2,
Fig.2 eine Draufsicht auf das Ausführungsbeispiel der erfindungsgemäßen Verbindung gemäß Fig.1,
Fig.3 ein zweites Ausführungsbeispiel der erfindungsgemäßen Verbindung in einer Schnittansicht längs der Linie III-III in Fig.4 und
Fig.4 eine Draufsicht auf das Ausführungsbeispiel der erfindungsgemäßen Verbindung gemäß Fig.3.

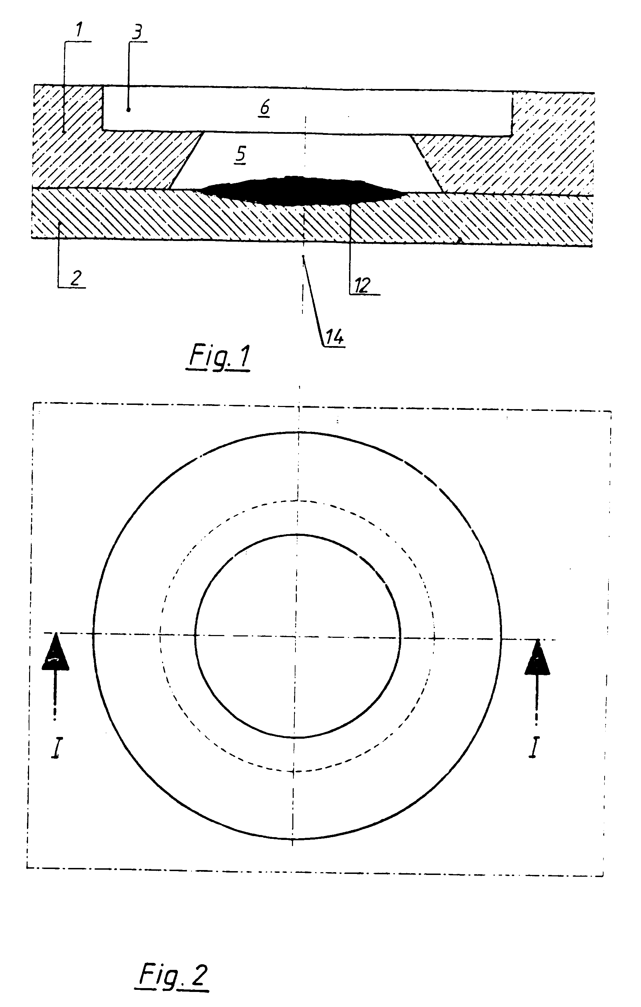

Wie es in der Zeichnung dargestellt ist, sind Bauteile 1 und 2 durch einen mittels einer Punktschweißstelle 12 in Bauteil 2 angeordneten Verbindungskörper 3 zusammengehalten. Eine Rändelung 4 dient als zusätzliche Sicherung gegen ein Verdrehen des Verbindungskörpers 3 im Bauteil 1. Bei dem in Fig. 1 dargestellten Ausführungsbeispiel der erfindungsgemäßen Verbindung umfaßt der Verbindungskörper 3 einen konischen Teil, der mit seiner Stirnfläche mit größerem Durchmesser das Bauteil 2 berührt und dazwischen die Punktschweißstelle 12 bildet. Ein zylindrischer Teil 6 verläuft konzentrisch zur Längsachse 14 des Bauteils 2 und schließt an die Stirnfläche mit kleinerem Durchmesser des konischen Teils 5 an. Er ermöglicht eine gute Wärmeabfuhr an die Umgebung. Dadurch daß der zylindrische Teil 6 einen größeren Durchmesser als die ihn berührende Fläche des konischen Teils 5 hat, ist ein Formschluß des Bauteiles 1 zwischen dem Verbindungskörper 2 und dem Bauteil 3 gegeben.

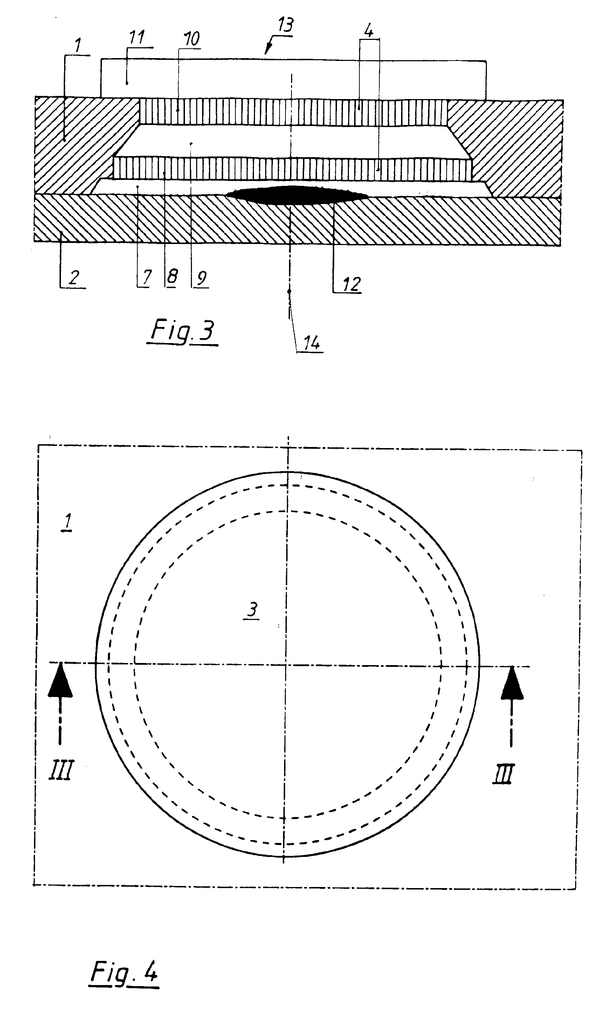

Der Verbindungskörper 13 kann gemäß Fig. 3 und 4 zusätzlich zu den konischen Teilen 7 und 9 zylindrische Teile 8 und 10 aufweisen. Die Teile 7, 8, 9 und 10 liegen im Bauteil 1, während der zylindrische Teil 11 aus dem Bauteil 1 herausragt. Es hat einen Durchmesser, der etwa so groß ist, wie der Durchmesser der Berührungsfläche des Teiles 7. Das Bauteil 11 ermöglicht eine besonders gute Wärmeabfuhr und ebenfalls eine formschlüssige Verbindung des Bauteiles 1 in axialer Richtung. Um eine zusätzliche Sicherung gegen ein Verdrehen zu erzielen, sind die zylindrischen Teile 8 und 10 mit einer Rändelung versehen.

Die bei der erfindungsgemäßen Verbindung vorgesehenen Bauteile müssen keine kreisförmigen Querschnitte haben, wie es in der Zeichnung dargestellt ist, sie können gleichfalls 6- oder 4-kantige Querschnitte aufweisen. Der Verbindungskörper kann gleichfalls mit einer zu Längsachse 14 konzentrischen Bohrung ausgeführt sein, sodaß eine Lochschweißung möglich ist.

## Patentansprüche

1. Verbindung zwischen Bauteilen aus verschiedenen Materialien, bei der in eines der Bauteile ein Verbindungskörper eingesetzt ist, der mit dem anderen Bauteil verschweißt ist, dadurch gekennzeichnet, daß der Verbindungskörper (3; 13) einen konischen Teil (5; 7, 9) und einen dazu koaxialen zylindrischen Teil (6; 8, 10) umfaßt, wobei der konische Teil (5; 7) an seiner Stirnfläche mit größerem Durchmesser mit dem anderen Bauteil verschweißt ist.

2. Verbindung nach Anspruch 1, dadurch gekennzeichnet, daß der Verbindungskörper (3; 13) in das Bauteil (1, 2) eingesetzt ist, das die geringere Härte aufweist.

3. Verbindung nach Anspruch 1 oder 2, dadurch gekennzeichnet, daß der Verbindungskörper (3; 13) ein Drehkörper ist, dessen Längsachse (14) normal zur Verbindungsfläche der beiden Bauteile (1, 2) steht.

4. Verbindung nach einem der vorhergehenden Ansprüche, dadurch gekennzeichnet, daß von der Schweißstelle aus gesehen der Verbindungskörper (13) der Reihe nach abwechselnd konische (7, 9) und zylindrische Teile (8, 10) mit immer kleineren Durchmessern aufweist, wobei ein weiterer zylindrischer Teil (11) über der der Verbindungsfläche abgewandten Seite des Bauteils (1) angeordnet ist, in das der Verbindungskörper (13) eingesetzt ist, und etwa einen Durchmesser gleich dem Durchmesser des an der Schweißstelle liegenden konischen Teils (7) aufweist.

5. Verbindung nach einem der vorhergehenden Ansprüche, dadurch gekennzeichnet, daß wenigstens die Umfangsfläche des der Schweißstelle am nächsten liegenden zylindrischen Teils (6; 8) des Verbindungskörpers (3; 13) eine Rändelung oder Zahnung aufweist.

6. Verfahren zur Herstellung einer Verbindung nach Anspruch 1, dadurch gekennzeichnet, daß an der zu verbindenden Stelle in einem Bauteil (1) ein Loch ausgestanzt und danach der Verbindungskörper (3; 13) eingepreßt und durch Schweißen, vorzugsweise Widerstandspunktschweißen mit dem anderen Bauteil (2) verbunden wird, wobei der konische Teil (5;7) an seiner Stirnfläche mit größerem Durchmesser mit dem anderen Bauteil (2) verschweißt wird.

## Claims

1. A connection between construction elements of different materials, in which connection a connecting body is installed into one of the construction elements, which body is welded to the other construction element, characterised in that the connecting body (3; 13) comprises a conical part (5; 7, 9) and a cylindrical part (6; 8, 10) coaxial to this, wherein the conical part (5; 7) is welded at its front face having the larger diameter to the other construction element.

2. A connection according to claim 1, characterised in that the connecting body (3; 13) is installed into the construction element (1, 2) which construction element comprises a lesser degree of hardness.

3. A connection according to claim 1 or 2, characterised in that the connecting body (3; 13) is a rotary body, the longitudinal axis (14) of which stands normal to the connecting surface of the two construction elements (1, 2).

4. A connection according to any one of the preceding claims, characterised in that viewed from the welding point the connecting body (13) comprises alternately conical (7, 9) and cylindrical parts (8, 10) having progressively smaller diameters, wherein a further cylindrical part (11) is disposed above the side of the construction element (1) remote from the connecting surface, into which construction element the connecting body (13) is installed, and comprises a diameter approximately equal to the diameter of the conical part (7) lying at the welding point.

5. A connection according to any one of the preceding claims, characterised in that at least the peripheral surface of cylindrical part (6; 8) or the connecting body (3; 13), which part lies closest to the welding point, is milled or provided with teeth.

6. A process for producing a connection according to claim 1, characterised in that at the point in a construction element (1), which point is to be connected, a hole is punched out and thereafter the connecting body (3; 13) is pressed in and is connected to the other construction element (2) by means of welding, preferably resistance spot welding, wherein the conical part (5; 7) is welded at its front face having the larger diameter to the other construction element (2).

## Revendications

1. Liaison entre des composants en matériaux différents, dans laquelle on introduit dans un des composants un élément de liaison qui est soudé avec l'autre composant, caractérisée en ce que l'élément de liaison (3;13) comprend une partie conique (5;7,9) et une partie cylindrique (6;8,10) coaxiale à cette dernière, la partie conique (5;7) étant soudée avec l'autre composant par sa surface frontale présentant le diamètre le plus grand.

2. Liaison selon la revendication 1, caractérisée en ce que l'élément de liaison (3;13) est introduit dans le composant (1,2) qui présente la dureté la plus faible.

3. Liaison selon la revendication 1 ou 2, caractérisée en ce que l'élément de liaison (3;13) est un corps tournant dont l'axe longitudinal (14) est perpendiculaire à la surface de liaison des deux composants (1,2).

4. Liaison selon l'une des revendications précédentes, caractérisée en ce que l'élément de liaison (13) comporte, en partant de l'endroit de soudage, en série, des parties coniques (7,9) et cylindriques (8,10) en alternance dont les diamètres vont en diminuant, un élément cylindrique supplémentaire (11) étant disposé sur le côté du composant (1) qui est opposé à la surface de liaison, cet élément cylindrique supplémentaire étant introduit dans l'élément de liaison (13) et présentant un diamètre correspondant approximativement au diamètre de la partie conique (7) se trouvant à l'endroit de soudage.

5. Liaison selon l'une des caractéristiques précédentes, caractérisée en ce qu'au moins la surface périphérique de la partie cylindrique (6;8) de l'élément de liaison (3,13) qui est la plus proche de l'endroit de soudure présente un moletage ou une denture.

6. Procédé pour fabriquer une liaison selon la revendication 1, caractérisé en ce que, à l'endroit de la liaison, on réalise un trou par matriçage dans un composant (1), en ce qu'ensuite l'élément de liaison (3;13) est emmanché et est relié à l'autre composant (2) par soudure, de préférence par soudure par points, la partie conique (5,7) étant soudée sur l'autre composant (2) par sa surface frontale présentant le diamètre le plus grand.
